# EUROPÄISCHE PATENTSCHRIFT

(11) **EP 1 806 260 B1**
(45) Veröffentlichungstag und Bekanntmachung des Hinweises auf die Patenterteilung: **13.07.2011**
(21) Anmeldenummer: 07000168.0
(22) Anmeldetag: 05.01.2007
(51) Int. Cl.: B60R 1/08

(54) **Aufsatzspiegel zur Anbringung an einem Aussenspiegel eines Kraftfahrzeugs**
Clip-on mirror for attachment to an external rear-view mirror of a motor vehicle
Mirroir additionnel pour montage sur un rétroviseur extérieur d'un véhicule automobile

(30) Priorität: 06.01.2006 NL 1030858
(43) Veröffentlichungstag der Anmeldung: 11.07.2007
(73) Patentinhaber: Verjo B.V., 5272 PB Sint-Michielsgestel (NL)
(72) Erfinder: Verstappen, Johan Franciscus, 5271 Le Sint Michielsgestel (NL)
(74) Vertreter: Valkonet, Rutger

(56) Entgegenhaltungen:
- EP-A- 0 407 638
- EP-A- 0 573 130
- GB-A- 2 230 750
- US-A- 4 906 088
- PATENT ABSTRACTS OF JAPAN Bd. 2003, Nr. 12, 5. Dezember 2003 (2003-12-05) -& JP 2004 196224 A (MURAKAMI CORP), 15. Juli 2004 (2004-07-15)

## Beschreibung

Die Erfindung betrifft einen Aufsatzspiegel zur Anbringung an einem Außenspiegel eines Kraftfahrzeugs, umfassend ein mit einer Spiegelfläche versehenes Gehäuse, sowie Befestigungsmittel, eingerichtet zur Befestigung des Gehäuses des Aufsatzspiegels mit dem Gehäuse des Außenspiegels.

Ein solcher Aufsatzspiegel ist allgemein bekannt und wird oft angewandt, um die Sicht neben und hinter dem Fahrzeug zu vergrößern, zumal wenn ein die Sicht behindernder Anhänger oder Wohnwagen vom Fahrzeug gezogen wird.

Aufsatzspiegel werden allerdings auch benutzt im Rahmen des Fahrunterrichts, wobei ein Fahr-Anwärter in Begleitung eines Fahrlehrers oder Fahrprüfers (nachstehend Begleiter genannt) am Verkehr teilnimmt, um eine Fahrtüchtigkeitsbescheinigung (Führerschein) zu erhalten. Für den Begleiter ist es nicht möglich, den originalen linken Außenspiegel während der Prüfung und des Unterrichts zu benutzen. Der linke Außenspiegel muss ja vom Fahr-Anwärter benutzt werden. Laut den gesetzlichen Bestimmungen soll ja ein Fahrer minimal über einen Innenspiegel und einen linken Außenspiegel verfügen können.

Bekannte Ausführungsformen eines solchen Aufsatzspiegels sind mittels eines Rahmens wohl oder nicht mit (flexiblen) Befestigungsmitteln versehen. Nachteil der derzeit bekannten Aufsatzspiegel ist oft der beschränkte Sichtwinkel, der erhalten wird, da sich der Fahrer immer noch mit einem sogenannten "toten Winkel" konfrontiert sieht. Darüber hinaus sind die bekannten Aufsatzspiegel in einer linken und einer rechten Ausführung erhältlich und sind sie nicht ohne aufwendige Montage an dem Außenspiegel anzubringen. Dadurch sind die bekannten Aufsatzspiegel teuer und komplex hinsichtlich der Konstruktion und der Benutzung. Außerdem ist die Befestigung des bekannten Aufsatzspiegels an einem Außenspiegel derart gestaltet, dass Schwingungen während der Fahrt nicht ausgeschlossen sind.

Ein Aufsatzspiegel entsprechend dem Oberbegriff des Anspruchs 1 ist aus der EP-A-0 573 130 bekannt.

Die Erfindung bezweckt die Behebung der obengenannten Nachteile und die Verschaffung eines Aufsatzspiegels der obengenannten Art, der einerseits einfach hinsichtlich der Konstruktion ist und sich folglich auch einfach montieren lässt, jedoch außerdem eine schwingungsfreie Befestigung ermöglicht. Erfindungsgemäß wird ein Aufsatzspiegel mit den Merkmalen des Anspruchs 1 vorgeschlagen.

Auf diese Weise wird eine stabile jedoch einfache Befestigung eines Aufsatzspiegels an dem Außenspiegel realisiert, wodurch außerdem Schwingungen durch die Dreipunktbefestigung - vermieden werden. Ein solcher Aufsatzspiegel ist somit schlechthin sehr geeignet, im Rahmen der Fahrtüchtigkeit eingesetzt zu werden, wo einem Fahrlehrer einen korrekt eingestellter linker und optional auch rechter Aufsatzspiegel zur Verfügung steht, ohne die Sicht des Fahr-Anwärters zu behindern.

Auch das Problem des "toten Winkels" wird damit gelöst.

Dies alles wird auch durch den Umstand eingegeben, dass derzeit der Begleiter immer über seine Schulter schauen muss, um den linken blinden Winkel im Blick zu halten. Diese Blick-Reaktion weist den Anwärter darauf hin, dass der linke blinde Winkel überwacht werden soll. Durch den zusätzlichen Aufsatzspiegel kann der Begleiter auf einfache und unauffällige Weise die blinden Winkel überwachen und feststellen, ob der Anwärter eine korrekte Art und Weise des Schauens anwendet.

Darüber hinaus kann der häufige Blick über die Schulter durch einen Begleiter zu körperlichen Beschwerden führen. Durch eine korrekte Benutzung des Aufsatzspiegels entsprechend der Erfindung wird dieses Arbeitssicherheitsrisikos minimalisiert.

Der erfindungsgemäße Aufsatzspiegel kann sowohl links als auch rechts benutzt werden. Bei Anwendung (ergänzender) rechter Aufsatzspiegel kann die Benutzung des rechten Außenspiegel durch einen Fahr-Anwärter während des Fahrunterrichts und während der Fahrprüfung angelernt werden. Bislang wurde der rechte Außenspiegel vom Begleiter benutzt, um rückwärts zu schauen. Der Aufsatzspiegel nimmt die Benutzung des originalen rechten Außenspiegels durch den Begleiter weg, so dass der Schüler den originalen rechten Außenspiegel benutzen und die Benutzung dieses originalen rechten Außenspiegels erlernen kann.

Bei einer spezifischen Ausführungsform sind jedenfalls zwei Angriffselemente als ein Klemmbügel ausgeführt, die um einen Rand des Gehäuses des Außenspiegels in Angriff bringbar sind. Dabei kann der Klemmbügel durch einen in dem Gehäuse des Aufsatzspiegels angebrachten Schlitz hindurchragen und insbesondere ist der Klemmbügel mittels einer in dem Gehäuse des Aufsatzspiegels aufgenommenen Einstellschraube verstellbar. Mehr spezifisch ist der Klemmbügel mit einer Bohrung mit Innengewinde versehen, das mit einem an der Einstellschraube angebrachten Außengewinde zusammenwirkt. Mit diesen Aspekten ist neben einer einfachen Montage auch eine gute Befestigung realisiert, die außerdem eine einfache Verstellung ermöglicht.

Bei einer anderen Ausführungsform ist das dritte Angriffselement als ein Einstellfuss ausgeführt, der auf dem Gehäuse des Außenspiegels abstützbar ist.

Mehr spezifisch ist der Einstellfuss mit einem Außengewinde versehen, das mit einem Innengewinde einer in dem Gehäuse des Aufsatzspiegels aufgenommenen Einstellmutter zusammenwirkt.

Um die Verstellung beziehungsweise Befestigung beziehungsweise Montage des Aufsatzspiegels auf dem Außenspiegel zu ermöglichen, ist erfindungsgemäß das Gehäuse des Aufsatzspiegels mit Führungen versehen, in die jedes Angriffselement aufnehmbar ist. Damit kann das Gehäuse mit einer in jeder Führung endenden Öffnung versehen sein. Dadurch ist für einen Benutzer einfach, mit einem geeigneten Werkzeug, wie zum Beispiel einem Innensechskantschlüssel oder einem Schraubenzieher die Angriffselemente einzustellen, einerseits zur Befestigung und anderseits zum Lösen des Aufsatzspiegels von dem Außenspiegel.

Bei einer spezifischen Ausführungsform sind die Führungen Teil einer in dem Gehäuse des Aufsatzspiegels befestigbaren Innenmechanik, welche Innenmechanik sowie das Gehäuse des Aufsatzspiegels mit miteinander zusammenwirkenden Kupplungsmitteln versehen sind.

Indem sich bei einer funktionellen Ausführungsform die Spiegelfläche des Aufsatzspiegels über die Angriffselemente hinaus erstreckt, wird die gesamte Aufsatzhöhe (Außenspiegel mit Aufsatzspiegel) verringert, wodurch ebenfalls ein besseres Sichtfeld für den Benutzer entsteht. Ebenfalls wird eine bessere aerodynamische Konstruktion erzielt.

Die Erfindung wird nun an Hand einer Zeichnung im einzelnen erläutert, in welcher Zeichnung zeigen:
Figur 1 eine aufgebrochene Ansicht einer Ausführungsform eines erfindungsgemäßen Aufsatzspiegels;
Figur 2 eine Rückansicht der Spiegelfläche und der Innenmechanik der Ausführungsform des Aufsatzspiegels von Figur 1;
Figur 3 eine Ansicht des Inneren des Gehäuses des erfindungsgemäßen Aufsatzspiegels; und
Figur 4 die Unterseite des Gehäuses des erfindungsgemäßen Aufsatzspiegels.

Zum besseren Verständnis der Erfindung werden in der nachstehenden Beschreibung die gleichen Teile mit den gleichen Bezugszeichen angedeutet.

In den Figuren werden unterschiedliche Ansichten beziehungsweise Detailansichten eines erfindungsgemäßen Aufsatzspiegels 10 gezeigt.

Der erfindungsgemäße Aufsatzspiegel 10 ist mit einem Gehäuse 11 mit einem Umfangsrand 11 a-11 b versehen, in dem eine Innenmechanik 12 aufgenommen ist.

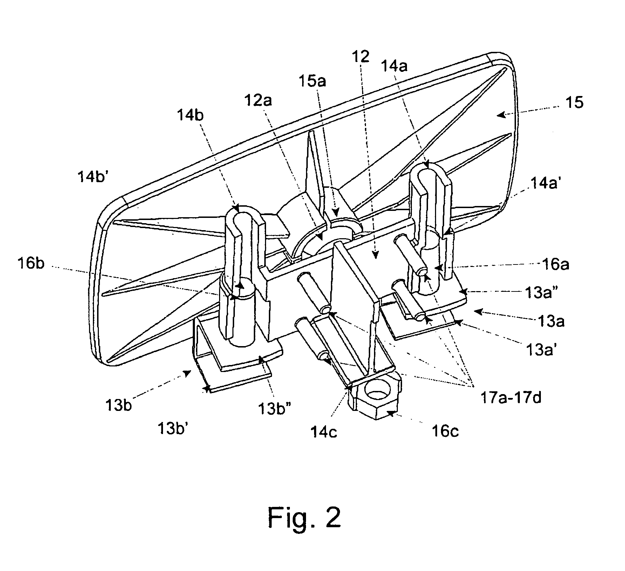

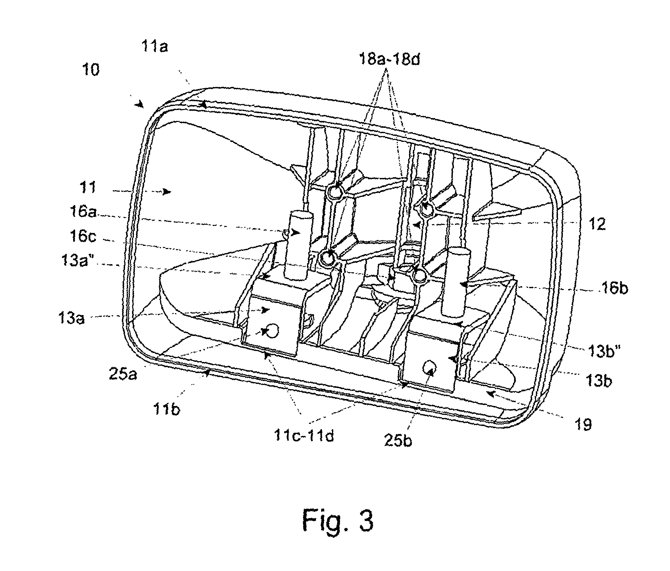

Die Innenmechanik 12 ist mit Befestigungsmitteln 17a-17d (siehe Figur 2), die mit entsprechenden Befestigungsmitteln 18a-18d zusammenarbeiten, in dem Gehäuse 11 angeordnet (siehe Figur 3).

Bei dieser Ausführungsform sind die Befestigungsmittel 17a-17d als herausragende Stifte auf der Innenmechanik 12 ausgeführt, die in entsprechende Öffnungen 18a-18d aufgenommen werden können (siehe Figur 3), angebracht in dem Gehäuse 11.

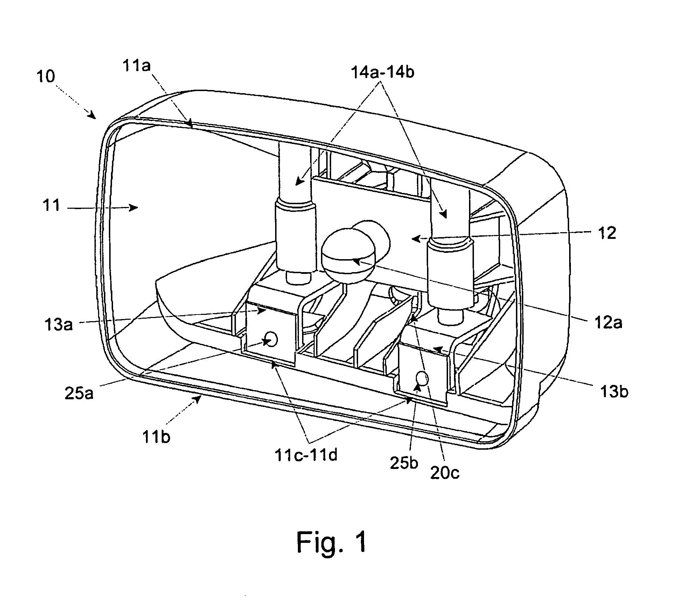

Wiederkehrend zu der Figur 1 ist die Innenmechanik 12 mit einem kugelförmigen Nocken 12a versehen, auf dem (siehe Figur 2) eine Spiegelfläche 15 befestigbar ist.

Zu diesem Zweck ist die Spiegelfläche 15 mit einer entsprechenden Kupplung 15a versehen, die um den kugelförmigen Nocken 12a angebracht werden kann. In der Spiegelfläche 15 ist ein Spiegelelement anzubringen, dessen Sichtwinkel mittels der Kupplung 12a-15a einfach eingestellt werden kann (von Hand).

Dadurch kann das Spiegelelement unabhängig von dem Gehäuse 11 bewegt und eingestellt werden. Das Gehäuse 11 kann weiterhin auf dem Außenspiegel stehen bleiben, so dass keine oder nur eine teilweise Demontage erforderlich ist. Dadurch kann der Begleiter (beim Fahrunterricht) den Spiegel derart einstellen, dass er immer die beste Sicht im Spiegel hat. Beim Wechsel des Begleiters ist in einfacher und schneller Art und Weise das Sichtfeld anpassbar.

Für die funktionelle Befestigung des Aufsatzspiegels 10 auf einem (nicht dargestellten) Seiten- oder Außenspiegel eines Fahrzeugs, wie eines PKW oder eines LKW, sind Befestigungsmittel 13a-13b-13c vorgesehen, die als Angriffselemente ausgeführt sind, die an drei Stellen an dem (nicht dargestellten) Gehäuse des Außenspiegels angreifen, auf dem der Aufsatzspiegel zu befestigen ist.

Die Befestigungsmittel beziehungsweise Angriffselemente 13a-13b sind als sogenannte u-förmige Klemmbügel ausgeführt, jeweils versehen mit zwei Schenkeln 13a'-13a" beziehungsweise 13b'-13b". Die Schenkel 13a' beziehungsweise 13b' (siehe Figur 2) jeden Klemmbügels 13a-13b sind in Schlitze 11 c-11 d aufnehmbar, angebracht in dem Unterrand 11 b des Gehäuses 11. Die Schenkel 13a'-13b' können somit unterhalb des Umfangsrands des Gehäuses (nicht dargestellt) des Außenspiegels angebracht werden, so dass dieser Rand zwischen die Schenkel 13a'-13b' und den Unterrand 11 b des Gehäuses 11 des Aufsatzspiegels 10 eingeklemmt wird.

Das Klemmen der Klemmbügel 13a-13b, um das Gehäuse 11 des Aufsatzspiegels 10 auf dem (nicht dargestellten) Gehäuse des Außenspiegels zu befestigen, erfolgt mittels Einstellschrauben 16a-16b, die in Führungen 14a-14b aufgenommen sind. Jede Einstellschraube 16a-16b ist mit einem Außengewinde versehen, das mit einem Innengewinde zusammenwirkt, das in einer Öffnung (nicht dargestellt) in dem Schenkel 13a" beziehungsweise 13b" jeden Klemmbügels 13a-13b angebracht ist.

Auf diese Art und Weise kann der Klemmbügel 13a-13b derart verstellt werden, dass der Schenkel 13a'-13b' den (nicht dargestellten) oberen Rand des Außenspiegels, auf dem der Aufsatzspiegel 10 angeordnet werden soll, an den Unterrand 11 b des Gehäuses 11 festklemmt. Um zu vermeiden, dass die Einstellschraube 16a-16b aus der Führung 14a-14b herausgeschraubt werden kann, ist diese mit einer Sperrung 14a' beziehungsweise 14b' versehen, an die die Einstellschraube 16a beziehungsweise 16b stößt.

Der Schenkel 13a"-13b" ist mittels eines Gelenks 25a-25b (zum Beispiel einer Niet) gelenkig verbunden mit dem Bügel 13a-13b, so dass der Bügel 13a-13b (und folglich auch der Schenkel 13a'-13b') verdreht beziehungsweise verstellt werden kann, damit der Schenkel 13a'-13b' gegenüber dem oberen Rand des Außenspiegels ausgerichtet werden kann. Dieser obere Rand ist nämlich nicht immer plan, sondern gekrümmt ausgeführt und indem der Klemmbügel 13a-13b (und insbesondere der Schenkel 13a'-13b') um das Gelenk gegenüber dem Schenkel 13a"-13b" verdreht (verstellt) wird, kann der Aufsatzspiegel an unterschiedlich ausgestalteten Gehäusen eines Außenspiegels angeordnet werden.

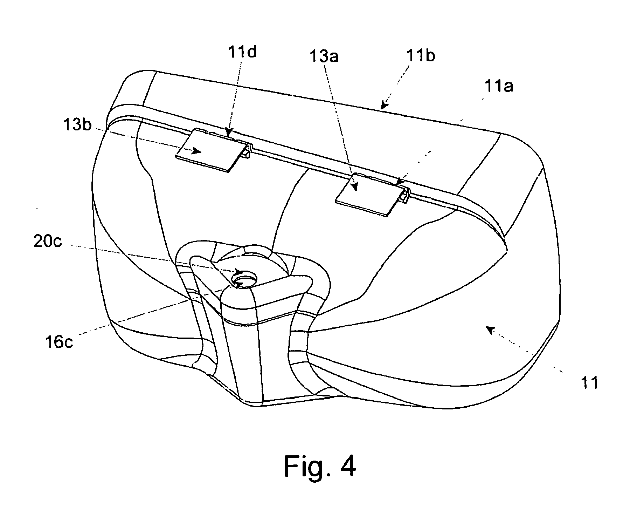

Weiter umfassen die Befestigungsmittel ein drittes Angriffselement, das als Einstellfuss verstellbar in einer Einstellmutter 16c aufgenommen ist, die fest in einer Führung 14c der Innenmechanik 12 aufgenommen ist. Der Einstellfuss stützt auf dem Gehäuse des originalen Außenspiegels ab, indem dieser, wie gezeigt in Figur 4, durch eine Öffnung 20c in das Gehäuse 11 hineinragt. Der Einstellfuss ist an seinem freien, nicht an dem Gehäuse des Außenspiegels angreifenden, Ende mit einer Aussparung versehen, in die ein Innensechskantschlüssel als Einstellwerkzeug aufnehmbar ist.

Somit kann der Einstellfuss in der Einstellmutter 16c verdreht werden, so das Gehäuse 11 an drei Punkten, gebildet von den Angriffselementen 13a-13b-13c, an dem Gehäuse des Außenspiegels (nicht dargestellt) abstützt. Die Einstellschrauben 16a-16b beziehungsweise der Einstellfuss sind in Führungen 14a-14b-14c aufgenommen, wohl oder nicht mit Öffnungen in dem Gehäuse 11 versehen, so dass von außen mittels zum Beispiel eines Schraubenziehers oder eines Innensechskantschlüssels als Einstellwerkzeug das Gehäuse 11 zum Zwecke der Befestigung beziehungsweise der Demontage des Aufsatzspiegels 10 auf dem beziehungsweise von dem (nicht dargestellten) Außenspiegel verstellt werden kann.

Auf diese Weise kann eine schnelle und effektive Montage eines Aufsatzspiegels auf einem Außenspiegel realisiert werden, wobei der Aufsatzspiegel an drei Angriffspunkten an dem Gehäuse des Außenspiegels angreift. Bedingt durch die Konstruktion der drei Angriffselemente 13a-13c entsteht eine Klemmkraft, die von den drei Angriffspunkten erzeugt wird und welche Klemmkräfte aufeinander zu arbeiten.

So wird eine solide, feste und auch verkehrssichere Montage des Aufsatzspiegels auf einem Außenspiegel realisiert.

Indem sich der untere Rand 11 b des Gehäuses 11 bis über den Punkt hinaus erstreckt, an dem die Klemmelemente 13a-13b an dem Gehäuse des Außenspiegels angreifen, erstreckt sich auch die Spiegelfläche 15 über die Klemmmittel 13a-13b hinaus, so dass eine Verringerung der Höhendimensionierung des Aufsatzspiegels realisiert werden kann.

Bedingt durch den herabgesetzten schrägen Montage-Rand des Gehäuses 11 auf einem Außenspiegel gerät die Vorderseite in eine schräge Orientierung gegenüber dem Außenspiegel, wodurch Montage auf einem linken beziehungsweise rechten Außenspiegel möglich wird. Es brauchen folglich keine zwei unterschiedlichen Ausführungsformen entwickelt zu werden.

Indem die Einstellschrauben 16a-16b beziehungsweise der Einstellfuss in das Gehäuse 11 eingearbeitet werden, verschafft dies einen zusätzlichen Schutz vor Wandalismus oder Diebstahl, da der Aufsatzspiegel 10 nicht ohne Spezialwerkzeug demontiert werden kann.

Weiter ist der Aufsatzspiegel einfach und schnell von jedem anzubringen und abzumontieren, wobei durch die Benutzung von drei statt von zwei Befestigungspunkten der Aufsatzspiegel sehr solide auf den Außenspiegeln angeordnet werden kann. Die Befestigung ist derart entworfen, dass der Aufsatzspiegel auf nahezu allen Außenspiegeln montiert werden kann.

Durch die Konstruktion ist der Aufsatzspiegel zu 99 % schwingungsfrei. Dies ist erzielt durch: eine starre innere Ausgestaltung der Befestigungspunkte zum Drehpunkt des Spiegels in dem Gehäuse hin, den großen Durchmesser des Drehpunkts und die drei Befestigungspunkte an den bestehenden Außenspiegeln. Weiter ist das Gehäuse des Aufsatzspiegels aerodynamisch geformt, so dass der Luftwiderstand gering ist.

Dabei weist das Gehäuse eine kleine Absenkung an der Vorderseite auf. Diese Absenkung ist schräg unterhalb des Gehäuses angebracht, wodurch der Luftwiderstand geringer ist im Vergleich zu einem herkömmlichen Aufsatzspiegel. Durch die schräge Stellung ist weiter eine linke und rechte Montage mit ein und demselben Aufsatzspiegel möglich.

## Patentansprüche

1. Aufsatzspiegel (10) zur Anbringung auf einem Außenspiegel eines Kraftfahrzeugs, umfassend ein Gehäuse (11) versehen mit einer Spiegelfläche (15), sowie Befestigungsmittel (13) eingerichtet zur Befestigung des Gehäuses (11) des Aufsatzspiegels mit dem Gehäuse des Außenspiegels, **dadurch gekennzeichnet, dass** die Befestigungsmittel (13) als drei Angriffselemente (13) ausgeführt sind, welche Angriffselemente mit dem Gehäuse des Außenspiegels an drei Angriffspunkten in Angriff bringbar sind und wobei die drei Angriffselemente (13) derart ausgeführt sind, dass Klemmkräfte entstehen, die von den drei Angriffspunkten erzeugt werden, und welche Klemmkräfte aufeinander zu arbeiten.

2. Aufsatzspiegel gemäß Anspruch 1, **dadurch gekennzeichnet, dass** jedenfalls zwei Angriffselemente (13a-13b) als ein Klemmbügel ausgeführt sind, der um einen Rand des Gehäuses des Außenspiegels in Angriff bringbar ist.

3. Aufsatzspiegel gemäß Anspruch 2, **dadurch gekennzeichnet, dass** der Klemmbügel (13a-13b) durch einen in dem Gehäuse (11) des Aufsatzspiegels (10) angebrachten Schlitz (11c-11d) hindurchragt.

4. Aufsatzspiegel gemäß den Ansprüchen 2 oder 3, **dadurch gekennzeichnet, dass** der Klemmbügel (13a-13b) mittels einer in dem Gehäuse des Aufsatzspiegels aufgenommenen Einstellschraube (16a-16b) verstellbar ist.

5. Aufsatzspiegel gemäß Anspruch 4, **dadurch gekennzeichnet, dass** der Klemmbügel (13a-13b) mit einer Bohrung mit Innengewinde versehen ist, das mit einem an der Einstellschraube (16a-16b) angebrachten Außengewinde zusammenwirkt.

6. Aufsatzspiegel gemäß einem oder mehreren der vorgehenden Ansprüche, **dadurch gekennzeichnet, dass** das dritte Angriffselement als ein Einstellfuss ausgeführt ist, der an dem Gehäuse (11) des Außenspiegels (10) abstützbar ist.

7. Aufsatzspiegel gemäß Anspruch 6, **dadurch gekennzeichnet, dass** der Einstellfuss mit einem Außengewinde versehen ist, das mit einem Innengewinde einer in dem Gehäuse (11) des Aufsatzspiegels (10) aufgenommenen Einstellmutter (16c) zusammenwirkt.

8. Aufsatzspiegel gemäß einem oder mehreren der vorgehenden Ansprüche, **dadurch gekennzeichnet, dass** das Gehäuse (11) des Aufsatzspiegels (10) mit Führungen (14a-14b-14c) versehen ist, in die jeweils ein Angriffselement aufnehmbar ist.

9. Aufsatzspiegel nach Anspruch 8, **dadurch gekennzeichnet, dass** das Gehäuse mit einer in jeder Führung endenden Öffnung versehen ist.

10. Aufsatzspiegel gemäß den Ansprüchen 8 oder 9, **dadurch gekennzeichnet, dass** die Führungen (14a-14b-14c) Teil einer in dem Gehäuse (11) des Aufsatzspiegels (10) befestigbaren Innenmechanik (12) sind.

11. Aufsatzspiegel gemäß Ansprüche 10, **dadurch gekennzeichnet, dass** die Innenmechanik (12) sowie das Gehäuse (11) des Aufsatzspiegels (10) mit miteinander zusammenwirkenden Kupplungsmitteln (17a-17d; 18a-18d) versehen sind.

12. Aufsatzspiegel gemäß einem oder mehreren der vorgehenden Ansprüche, **dadurch gekennzeichnet, dass** sich die Spiegelfläche (15) des Aufsatzspiegels (10) über die Angriffselemente (13) hinaus erstreckt.

## Claims

1. Extra mirror (10) for mounting on an external mirror of a motor vehicle, comprising a housing (11) provided with a mirror-carrying surface (15), and fastening means (13) arranged to allow the housing (11) of the extra mirror to be fastened to the housing of the external mirror, **characterised in that** the fastening means (13) take the form of three engaging members (13), which engaging members can be brought into engagement with the housing of the exterior mirror at three points of engagement, and the three engaging members (13) being so designed that clamping forces which are generated by the three points of engagement are produced, which clamping forces act on one another.

2. Extra mirror according to claim 1, **characterised in that** at least two engaging members (13a-13b) take the form of a clamping yoke which can be brought into engagement around the edge of the housing of the external mirror.

3. Extra mirror according to claim 2, **characterised in that** the clamping yoke (13a-13b) projects through a slot (11c-11d) made in the housing (11) of the external mirror (10).

4. Extra mirror according to claim 2 or 3, **characterised in that** the clamping yoke (13a-13b) can be adjusted by means of a setting screw (16a-16b) held in the housing of the extra mirror.

5. Extra mirror according to claim 4, **characterised in that** the clamping yoke (13a-13b) is provided with a hole having an inside thread which co-operates with an outside thread provided on the setting screw (16a-16b).

6. Extra mirror according to one or more of the preceding claims, **characterised in that** the third engaging member takes the form of an adjusting foot which can be supported on the housing (11) of the external mirror (10).

7. Extra mirror according to claim 6, **characterised in that** the adjusting foot is provided with an outside thread which co-operates with an inside thread in an adjusting nut (16c) which is held in the housing (11) of the extra mirror (10).

8. Extra mirror according to one or more of the preceding claims, **characterised in that** the housing (11) of the extra mirror (10) is provided with guides (14a-14b-14c) in each of which an engaging member can be received.

9. Extra mirror according to claim 8, **characterised in that** the housing is provided with an opening which ends in each guide.

10. Extra mirror according to claim 8 or 9, **characterised in that** the guides (14a-14b-14c) are part of an internal mechanism (12) which can be fastened into the housing (11) of the extra mirror (10).

11. Extra mirror according to claim 10, **characterised in that** the internal mechanism (12) and the housing (11) of the extra mirror (10) are provided with coupling means (17a-17d, 18a-18d) which co-operate with one another.

12. Extra mirror according to one or more of the preceding claims, **characterised in that** the mirror-carrying surface (15) of the extra mirror (10) extends beyond the engaging members (13).

## Revendications

1. Rétroviseur additionnel (10) pour montage sur un rétroviseur extérieur d'un véhicule automobile, comprenant un boîtier (11) pourvu d'une surface de rétroviseur (15), ainsi que des moyens de fixation (13) aménagés pour la fixation du boîtier (11) du rétroviseur additionnel au boîtier du rétroviseur extérieur, **caractérisé en ce que** les moyens de fixation (13) sont réalisés comme trois éléments d'application (13) qui peuvent être appliqués avec le boîtier du rétroviseur extérieur sur trois points d'application et les trois éléments d'application (13) étant réalisés de telle manière que des forces de serrage apparaissent, lesquelles sont générées par les trois points d'application et travaillent les unes vers les autres.

2. Rétroviseur additionnel selon la revendication 1, **caractérisé en ce qu'**en tout cas, deux éléments d'application (13a-13b) sont réalisés comme un étrier de serrage qui peut être appliqué autour d'un bord du boîtier du rétroviseur extérieur.

3. Rétroviseur additionnel selon la revendication 2, **caractérisé en ce que** l'étrier de serrage (13a-13b) traverse une fente (11c-11d) montée dans le boîtier (11) du rétroviseur additionnel (10).

4. Rétroviseur additionnel selon la revendication 2 ou 3, **caractérisé en ce que** l'étrier de serrage (13a-13b) peut être réglé à l'aide d'une vis d'ajustage (16a-16b) reçue dans le boîtier du rétroviseur additionnel.

5. Rétroviseur additionnel selon la revendication 4, **caractérisé en ce que** l'étrier de serrage (13a-13b) est pourvu d'un perçage présentant un filetage intérieur qui coagit avec un filetage extérieur monté sur la vis d'ajustage (16a-16b).

6. Rétroviseur additionnel selon l'une ou plusieurs quelconques des revendications précédentes, **caractérisé en ce que** le troisième élément d'application est réalisé comme un pied de réglage qui peut être en appui contre le boîtier (11) du rétroviseur extérieur (10).

7. Rétroviseur additionnel selon la revendication 6, **caractérisé en ce que** le pied de réglage est pourvu d'un filetage extérieur qui coagit avec un filetage intérieur d'un écrou de réglage (16c) reçu dans le boîtier (11) du rétroviseur additionnel (10).

8. Rétroviseur additionnel selon l'une ou plusieurs quelconques des revendications précédentes, **caractérisé en ce que** le boîtier (11) du rétroviseur additionnel (10) est pourvu de guidages (14a-14b-14c), pouvant recevoir respectivement un élément d'application.

9. Rétroviseur additionnel selon la revendication 8, **caractérisé en ce que** le boîtier est pourvu d'une ouverture finissant dans chaque guidage.

10. Rétroviseur additionnel selon les revendications 8 ou 9, **caractérisé en ce que** les guidages (14a-14b-14c) font partie d'un mécanisme interne (12) pouvant être fixé dans le boîtier (11) du rétroviseur additionnel (10).

11. Rétroviseur additionnel selon la revendication 10, **caractérisé en ce que** le mécanisme interne (12) ainsi que le boîtier (11) du rétroviseur additionnel (10) sont pourvus de moyens de couplage (17a-17d ; 18a-18d) coagissant ensemble.

12. Rétroviseur additionnel selon l'une ou plusieurs quelconques des revendications précédentes, **caractérisé en ce que** la surface (15) du rétroviseur additionnel (10) s'étend au-delà des éléments d'application (13).
